Europäisches Patentamt

European Patent Office

Office Européen des brevets

(11) Veröffentlichungsnummer: **0 265 770 B1**

# (12) EUROPÄISCHE PATENTSCHRIFT

(45) Veröffentlichungstag der Patentschrift :
02.01.91 Patentblatt 91/01

(51) Int. Cl.$^5$: **H02M 7/10**

(21) Anmeldenummer: 87114959.7

(22) Anmeldetag : 13.10.87

(54) Anordnung zur Spannungsvervielfachung.

(30) Priorität : 24.10.86 DE 3636332

(43) Veröffentlichungstag der Anmeldung :
04.05.88 Patentblatt 88/18

(45) Bekanntmachung des Hinweises auf die
Patenterteilung :
02.01.91 Patentblatt 91/01

(84) Benannte Vertragsstaaten :
DE ES FR GB IT NL

(56) Entgegenhaltungen :
CH-A- 335 750

(73) Patentinhaber : Siemens Aktiengesellschaft
Wittelsbacherplatz 2
D-8000 München 2 (DE)

(72) Erfinder : Mook, Bruno
Ringstrasse 9
D-7500 Karlsruhe (DE)

# Beschreibung

Die Erfindung bezieht sich auf eine Schaltungsanordnung zur Spannungsvervielfachung in Form einer Kaskadenschaltung gemäß Oberbegriff des Anspruchs.

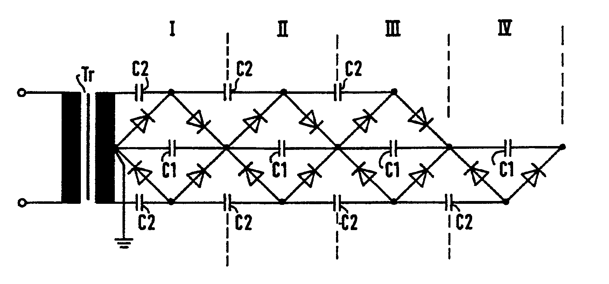

Derartige Spannungsvervielfacher bestehen in ihrer einfachsten Form aus einem Hochspannungstransformator, der eine Reihenschaltung von Kondensatoren speist, die über quer geschaltete Dioden in bekannter Weise aufgeladen werden, siehe z. B. CH-A-335 750, Figur 2. Wie Figur 1 dieser Literaturstelle zeigt, kann eine solche Kaskadenschaltung auch symmetrisch zu einer auf Nullpotential liegenden Mittelanzapfung der Sekundärwicklung des Hochspannungstrafos aufgebaut werden, wodurch die Strombelastbarkeit erhöht und die Welligkeit der Ausgangsspannung erniedrigt wird. Da schnelle Hochspannungsdioden höherer Strombelastbarkeit relativ teuer sind, soll ein Weg gefunden werden, den schaltungsmäßigen Aufwand einer symmetrischen Hochspannungskaskade zu verringern.

Eine Lösung dieser Aufgabe wird mit einer Schaltungsanordnung nach dem Anspruch erreicht.

Die erfinderische Maßnahme, die letzte Stufe einer mehrstufigen symmetrischen Hochspannungskaskade unsymmetrisch auszuführen und damit zwei Hochspannungsdioden und einen Kondensator einzusparen, geht von der Erkenntnis aus, daß die Dioden der letzten Stufe nur mit dem Laststrom belastet werden, während die Dioden der anderen Stufe die Verluste der ihr folgenden Stufen übernehmen müssen und demgemäß höher belastet sind.

Ein weiterer Vorteil besteht in der Einsparung von Bauvolumen, so daß die erfindungsgemäße Schaltung im gleichen Volumen wie eine einfache Kaskade geringerer Strombelastbarkeit einsetzbar ist.

Zur Erläuterung der Erfindung ist in der Figur ein Ausführungsbeispiel einer vierstufigen Spannungsvervielfacherschaltung schematisch dargestellt und im folgenden beschrieben.

Die Sekundärwicklung eines Hochspannungstransformators Tr weist eine Mittelanzapfung auf, die auf Nullpotential liegt und an welche eine Reihenschaltung von Glättungskondensatoren C1 angeschlossen ist. Symmetrisch dazu sind in den Vervielfacherstufen I ... III Reihenschaltungen von Schubkondensatoren C2 und querverbindende Dioden in bekannter Weise eingeschaltet. Die letzte, die IV. Stufe ist unsymmetrisch ausgebildet, sie weist lediglich zwei Dioden und die zugeordneten Glättungs- und Schubkondensatoren C1 und C2 auf, womit die bereits erwähnten Vorteile erreichbar sind.

# Ansprüche

Schaltungsanordnung zur Spannungsvervielfachung, ausgebildet als mehrstufige, zum Nullpotential symmetrische Kaskade vom Grainacher-Typ, **dadurch gekennzeichnet**, daß die letzte Stufe unsymmetrisch ausgeführt ist.

# Claims

A circuit arrangement for voltage multiplication, constructed as a multi-stage, symmetrical cascade to zero potential, of the Grainach type, characterised in that the last stage is designed to be asymmetrical.

# Revendications

Montage de multiplication de tension réalisé sous la forme d'une cascade à plusieurs étages, symétrique par rapport au potentiel nul, du type de Grainach, caractérisé par le fait que le dernier étage est dissymétrique.